(19) 

**Europäisches Patentamt**
**European Patent Office**
**Office européen des brevets**

(11) **EP 4 530 624 B1**

(12) **EUROPEAN PATENT SPECIFICATION**

(45) Date of publication and mention
of the grant of the patent:
**31.12.2025 Bulletin 2026/01**

(21) Application number: **24196613.4**

(22) Date of filing: **27.08.2024**

(51) International Patent Classification (IPC):
*G01N 29/04* (2006.01)          *G01N 29/12* (2006.01)
*G01N 29/34* (2006.01)          *G01N 29/46* (2006.01)
*G01N 29/50* (2006.01)          *G01M 5/00* (2006.01)

(52) Cooperative Patent Classification (CPC):
**G01N 29/041; G01M 5/0033; G01M 5/0066;
G01N 29/12; G01N 29/348; G01N 29/46;
G01N 29/50**

(54) **METHOD AND SYSTEM FOR DAMAGE LOCALIZATION USING LOW POWER GUIDED WAVE**

VERFAHREN UND SYSTEM ZUR SCHADENSLOKALISIERUNG UNTER VERWENDUNG EINER NIEDRIGENERGIEGEFÜHRTEN WELLE

PROCÉDÉ ET SYSTÈME DE LOCALISATION DE DOMMAGES À L'AIDE D'UNE ONDE GUIDÉE À FAIBLE PUISSANCE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.09.2023 IN 202321065751**

(43) Date of publication of application:
**02.04.2025 Bulletin 2025/14**

(73) Proprietor: **Tata Consultancy Services Limited
Maharashtra (IN)**

(72) Inventors:
• **GAIN, Supriya**
  **700156 New Town Kolkata - West Bengal (IN)**
• **BASU, Subhadeep**
  **700156 New Town Kolkata - West Bengal (IN)**
• **SINHARAY, Arijit**
  **700156 New Town Kolkata - West Bengal (IN)**

(74) Representative: **Goddar, Heinz J.
Boehmert & Boehmert
Anwaltspartnerschaft mbB
Pettenkoferstrasse 22
80336 München (DE)**

(56) References cited:
**EP-A1- 4 160 201**

• **BASU SUBHADEEP ET AL: "Guided Wave Resonance to Identify Damage in Thin Composite Plates", 2022 IEEE SENSORS, IEEE, 30 October 2022 (2022-10-30), pages 1 - 4, XP034243411, DOI: 10.1109/ SENSORS52175.2022.9967342**
• **EREMIN ARTEM ET AL: "Identification of delamination based on the Lamb wave scattering resonance frequencies", NDT&E INTERNATIONAL, vol. 103, April 2019 (2019-04-01), pages 145 - 153, XP085650549, ISSN: 0963-8695, DOI: 10.1016/ J.NDTEINT.2019.03.001**
• **GAIN SUPRIYA ET AL: "Exploration of Ultrasonic Guided Wave Resonance Technique for Damage Localization", 2023 IEEE SENSORS, IEEE, 29 October 2023 (2023-10-29), pages 1 - 4, XP034477226, DOI: 10.1109/ SENSORS56945.2023.10325301**

**Description**

CROSS-REFERENCE TO RELATED APPLICATIONS AND PRIORITY

The present application claims priority to Indian application no. 202321065751, filed on September 29, 2023.

TECHNICAL FIELD

The disclosure herein generally relates to damage localization, and, more particularly, to a method and a system for damage localization using low power ultrasonic guided waves.

BACKGROUND

Ultrasonic guided waves are routinely used in Non-Destructive Testing (NDT) for defect identification and localization in metal sheets or other complex structures. Usually, a high voltage burst excitation (100 to 1000 volts) is used by the available techniques to induce symmetric and asymmetric modes in thin plates of the complex structures/metal sheets. And then the defect is detected by observing the response of the transmitted symmetric and asymmetric modes.
However, there may be some applications where such high voltage is not permitted for safety reasons or for other reasons, such as unavailability of energy. For example, in-flight detection of defects in airplane wings may have such restrictions. So, identification and localization of defects with low voltage burst excitation is yet to be achieved. Document BASU SUBHADEEP ET AL: "Guided Wave Resonance to Identify Damage in Thin Composite Plates" discloses guided wave resonance-basednsignature to detect damaged composite plates. Traditionally, guided wave probing is done with burst mode excitations and typically one requires high voltage pulser to generate short bursts. Power requirement can even go higher for probing sound absorbing materials like carbon or glass fiber composites. Here, low amplitude continuous waves are used to hit the resonance conditions in a composite plate to form interferometric resonance spectra that can be used to detect any damage in the plate. Thus, this may be useful for probing very high sound absorbing materials or where it is prohibited to use too much excitation voltages for safety reasons. The work also compares traditional burst mode based measurements for completeness of the study (Abstract). Document EREMIN ARTEM ET AL: "Identification of delamination based on the Lamb wave scattering resonance frequencies" discloses testing the idea of using scattering resonance frequencies, which are sensitive to the crack's size and depth variation, for the express non-destructive estimation of its severity. The width and depth of artificial strip-like delaminations are estimated by matching theoretical eigenfrequencies, calculated in the framework of a corresponding 2D elastodynamic boundary value problem, with the experimentally obtained resonance frequencies. The high accuracy of the delamination characteristics obtained by this way indicates its potential utility for practice (Abstract). Document EP 4 160 201 A1 discloses method and system for evaluating residual life of components made of composite materials. Existing methods require performing computational methods such as Finite Element Analysis (FEA) on the results of Non-Destructive Testing (NDT) every time a component is inspected. This makes the process expensive and time-consuming. Thus, embodiments of present disclosure provide a method wherein NDT is performed using different sensing methods such as ultrasound, ultrasound pulse echo, thermography to determine type of defect, location of defect and depth of defect in a test component which are then fed into a pre-trained machine learning model to predict residual life of the component. Testing time is greatly reduced since the pre-trained machine learning model is trained offline using results of the computational methods (Abstract). Document GAIN SUPRIYA ET AL: "Exploration of Ultrasonic Guided Wave Resonance Technique for Damage Localization" discloses novel Guided wave resonance based technique for damage localization in metal sheets. Ultrasonic Guided waves for damage identification and localization is a well matured technique in Non-Destructive Testing /Evaluation. However, most of the time it is performed with high voltage pulse excitations that use several hundreds of volts in the form of a short burst. Here, we used a very low voltage excitation (SVpp) and continuous waves to do the same job with very promising results. The key to the technique lies in taking advantage of Guided wave resonance conditions to boost up the Signal to Noise ratio by several order higher (Abstract).

SUMMARY

Embodiments of the present disclosure present technological improvements as solutions to one or more of the above-mentioned technical problems recognized by the inventors in conventional systems. For example, in one aspect, there is provided a method as defined by claim 1 for damage localization using low power ultrasonic guided waves. The method comprises receiving, by a damage localization system via one or more hardware processors, one or more inputs associated with at least one structure comprising a damage, wherein the one or more inputs comprise a velocity of a lamb wave to be used for damage localization in the at least one structure, a frequency sweep information, and a location information of a transmitter and a receiver that are placed on the at least one structure; performing, by the damage localization system via the one or more hardware processors, a Vector network analyzer (VNA) sweep of a predefined frequency range on the at least one structure to form a primary guided wave resonance spectra; performing an Inverse Fast Fourier transform (IFFT) on the primary guided wave resonance spectra to obtain a primary time domain pulse propagation picture; calculating a pulse arrival time of a predefined pulse along the Y direction from the primary time domain pulse propagation picture; calculating a directional pulse arrival time of an x-directional pulse based, at least in part, on the velocity of the lamb wave and the location information of the transmitter and the receiver using a predefined directional arrival time calculation equation; creating an auto-correlation picture by auto-correlating a template of the time domain pulse propagation picture with the time domain pulse propagation picture, wherein the template is taken from the primary time domain pulse propagation picture based on a template range, wherein the template range is decided based on the pulse arrival time of the predefined pulse; identifying a predefined peak in the auto-correlation picture; determining whether the predefined peak is in a predefined time range of the directional pulse arrival time; upon determining that the predefined peak is not in the predefined time range of the directional pulse arrival time, calculating an arrival time of a predefined final pulse in the predefined time range; calculating a time difference between the pulse arrival time of the predefined pulse and the arrival time of the predefined final pulse; and determining a damage location in the at least one structure based on the calculated time difference, the velocity of the lamb wave, and the location information of the transmitter and the receiver using a predefined time difference calculation equation.

In an embodiment, upon determining that the predefined peak is in the predefined time range of the directional pulse arrival time, the method comprises: identifying a new predefined peak in the auto-correlation picture.

In an embodiment, the velocity of the lamb wave is estimated by performing: placing the transmitter and the receiver at a predefined distance in an undamaged structure; performing the VNA sweep of the predefined frequency range on the undamaged structure to form a secondary guided wave resonance spectra; performing IFFT on the secondary guided wave resonance spectra to obtain a secondary time domain pulse propagation picture; determining a secondary pulse arrival time of a primary pulse from the secondary time domain pulse propagation picture; and estimating velocity of the lamb wave based on the secondary pulse arrival time and the predefined distance using a velocity estimation formula.

In another aspect, there is provided a damage localization system as defined in claim 5 for damage localization using low power ultrasonic guided waves. The system comprises a memory storing instructions; one or more communication interfaces; and one or more hardware processors coupled to the memory via the one or more communication interfaces, wherein the one or more hardware processors are configured by the instructions to: receive one or more inputs associated with at least one structure comprising a damage, wherein the one or more inputs comprise a velocity of a lamb wave to be used for damage localization in the at least one structure, a frequency sweep information, and a location information of a transmitter and a receiver that are placed on the at least one structure; perform a Vector network analyzer (VNA) sweep of a predefined frequency range on the at least one structure to form a primary guided wave resonance spectra; perform an Inverse Fast Fourier transform (IFFT) on the primary guided wave resonance spectra to obtain a primary time domain pulse propagation picture; calculate a pulse arrival time of a predefined pulse along the Y direction from the primary time domain pulse propagation picture; calculate a directional pulse arrival time of an x-directional pulse based, at least in part, on the velocity of the lamb wave and the location information of the transmitter and the receiver using a predefined directional arrival time calculation equation; create an auto-correlation picture by auto-correlating a template of the time domain pulse propagation picture with the time domain pulse propagation picture, wherein the template is taken from the primary time domain pulse propagation picture based on a template range, wherein the template range is decided based on the pulse arrival time of the predefined pulse; identify a predefined peak in the auto-correlation picture; determine whether the predefined peak is in a predefined time range of the directional pulse arrival time; calculate an arrival time of a predefined final pulse in the predefined time range upon determining that the predefined peak is not in the predefined time range of the directional pulse arrival time; calculate a time difference between the pulse arrival time of the predefined pulse and the arrival time of the predefined final pulse; and determine a damage location in the at least one structure based on the calculated time difference, the velocity of the lamb wave, and the location information of the transmitter and the receiver using a predefined time difference calculation equation.

In yet another aspect, there are provided one or more non-transitory machine-readable information storage mediums as defined in claim 9 comprising one or more instructions which when executed by one or more hardware processors cause damage localization using low power ultrasonic guided waves by receiving, by a damage localization system, one or more inputs associated with at least one structure comprising a damage, wherein the one or more inputs comprise a velocity of a lamb wave to be used for damage localization in the at least one structure, a frequency sweep information, and a location information of a transmitter and a receiver that are placed on the at least one structure; performing, by the damage localization system, a Vector network analyzer (VNA) sweep of a predefined frequency range on the at least one structure to form a primary guided wave resonance spectra; performing an Inverse Fast Fourier transform (IFFT) on the primary guided wave resonance spectra to obtain a primary time domain pulse propagation picture; calculating a pulse arrival time of a predefined pulse along the Y direction from the primary time domain pulse propagation picture; calculating a directional pulse arrival time of an x-directional pulse based, at least in part, on the velocity of the lamb wave and the location information of the transmitter and the receiver using a predefined directional arrival time calculation equation; creating an auto-correlation picture by auto-correlating a template of the time domain pulse propagation picture with the time domain pulse propagation picture, wherein the template is taken from the primary time domain pulse propagation picture based on a template range, wherein the template range is decided based on the pulse arrival time of the predefined pulse; identifying a predefined peak in the auto-correlation picture; determining whether the predefined peak is in a predefined time range of the directional pulse arrival time; upon determining that the predefined peak is not in the predefined time range of the directional pulse arrival time, calculating an arrival time of a predefined final pulse in the predefined time range; calculating a time difference between the pulse arrival time of the predefined pulse and the arrival time of the predefined final pulse; and determining a damage location in the at least one structure based on the calculated time difference, the velocity of the lamb wave, and the location information of the transmitter and the receiver using a predefined time difference calculation equation.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an example representation of an environment, related to at least some example embodiments of the present disclosure.

FIG. 2 illustrates an exemplary block diagram of a damage localization system for damage localization using low power ultrasonic guided waves, in accordance with an embodiment of the present disclosure.

FIGS. 3A and 3B, collectively, illustrate an exemplary flow diagram of a method for damage localization using low power ultrasonic guided waves, in accordance with an embodiment of the present disclosure.

FIG. 4 illustrates an exemplary representation of a lamb wave resonance setup, in accordance with an embodiment of the present disclosure

FIG. 5 is a schematic representation of a pulse-echo type setup, in accordance with an embodiment of the present disclosure.

FIG. 6 illustrates an exemplary flow diagram of a method for estimating velocity of a lamb wave, in accordance with an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As discussed earlier, ultrasonic guided waves for damage identification and localization is a well matured technique in Non-Destructive Testing/Evaluation. However, most of the time it is performed with high voltage pulse excitations that use several hundreds of volts in the form of a short burst, thus making it unsafe and unsustainable for defect localization in large structures like airplane wings, bridges, buildings, wind turbine blades etc.

So, damage localization techniques that can reduce the power requirement to several order of magnitude is still to be explored.

Embodiments of the present disclosure overcome the above-mentioned disadvantages by providing a method and a system for damage localization using low power ultrasonic guided waves. The system of the present disclosure uses a Vector network analyzer (VNA) sweep of defined frequency range with low signal amplitude on a structure to form a guided wave resonance spectra. Then, the system performs an Inverse Fast Fourier transform (IFFT) on the guided wave resonance spectra to obtain a time domain pulse propagation picture. Thereafter, the system uses a pulse echo based analysis technique based on the time domain pulse propagation picture to locate the damage position in the structure.

In the present disclosure, the system and the method use the VNA sweep of defined frequency range with low signal amplitude on the structure to form a guided wave resonance spectra, thus ensuring safety of the structure which further makes the system more sustainable from the usage perspective on large structures. Further, the use of low signal amplitude drastically reduces the power requirement of the system, thus making the system usable for structures where high voltage usage is not allowed/not available.

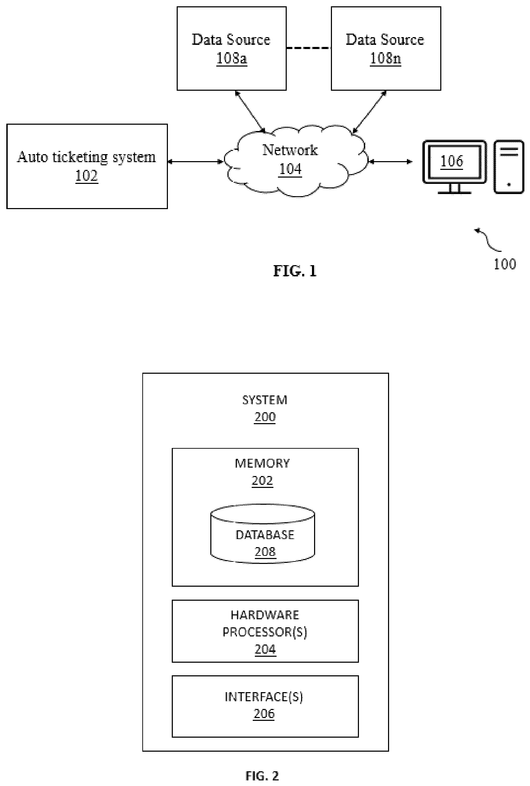

Referring now to the drawings, and more particularly to FIGS. 1 through 6, where similar reference characters denote corresponding features consistently throughout the figures, there are shown preferred embodiments and these embodiments are described in the context of the following exemplary system and/or method.

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, performing Inverse Fast Fourier transform (IFFT) on a primary guided wave resonance spectra, calculating pulse arrival time, creating auto-correlation picture, etc. The environment 100 generally includes a damage localization system 102, an electronic device 106 (hereinafter also referred as a user device 106), and a plurality of data sources 108a-108n, each coupled to, and in communication with (and/or with access to) a network 104. It should be noted that one user device is shown for the sake of explanation; there can be more number of user devices.

The network 104 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among two or more of the parts or users illustrated in FIG. 1, or any combination thereof.

Various entities in the environment 100 may connect to the network 104 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, or any combination thereof.

The user device 106 is associated with a user (e.g., a structure maintenance personnel/structure engineer) who is responsible for managing/examining/maintaining manufacturing quality of a structure, such as airplane wings, bridges, buildings, wind turbine blades etc. Examples of the user device 106 include, but are not limited to, a personal computer (PC), a mobile phone, a tablet device, a Personal Digital Assistant (PDA), a server, a voice activated assistant, a smartphone, and a laptop.

The damage localization system 102 includes one or more hardware processors and a memory. The damage localization system 102 is first configured to receive one or more inputs associated with at least one structure comprising a damage via the network 104 from the plurality of data sources 108a-108n. In an embodiment, the plurality of data sources 108a-108n may include, but are not limited to, structure manufacturing data, structure information management system, manufacturing execution systems (MES), manual input etc. The one or more inputs include a velocity of a lamb wave to be used for damage localization in the at least one structure, a frequency sweep information, and location information of a transmitter and a receiver that are placed on the at least one structure. The damage localization system 102 then performs Vector network analyzer (VNA) sweep of a predefined frequency range on the at least one structure to form a primary guided wave resonance spectra. In an embodiment, without limiting the scope of the invention, the predefined frequency range is 50kHz to 1MHz. Then, the damage localization system 102 performs IFFT on the primary guided wave resonance spectra to obtain a primary time domain pulse propagation picture. Thereafter, the damage localization system 102 calculates a pulse arrival time of a predefined pulse and a directional pulse arrival time of an x-directional pulse. Further, the damage localization system 102 creates an auto-correlation picture by auto-correlating a template of the time domain pulse propagation picture with the time domain pulse propagation picture which is then used to calculate a time difference between the pulse arrival time of the predefined pulse and an arrival time of a predefined final pulse. Finally, the damage localization system 102 uses the calculated time difference, the velocity of the lamb wave, and the location information of the transmitter and the receiver to determine a damage location in the at least one structure using a predefined time difference calculation equation.

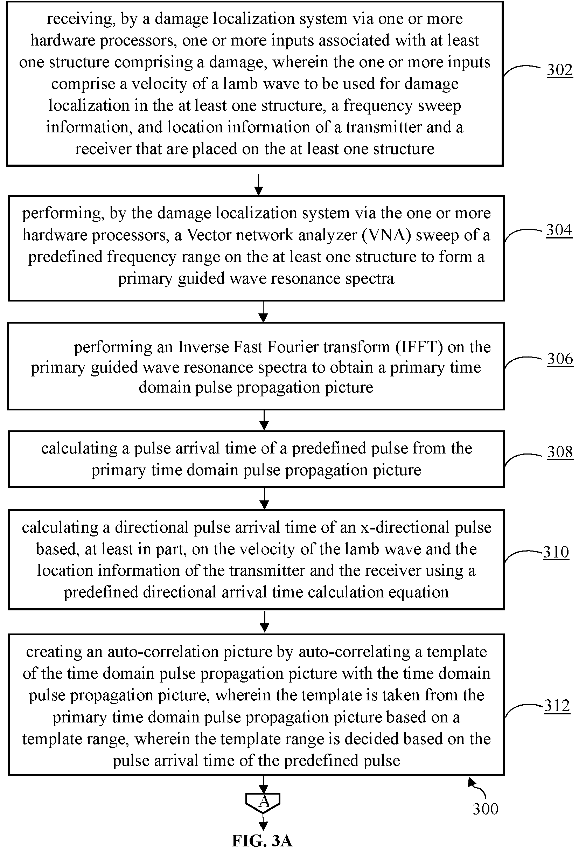

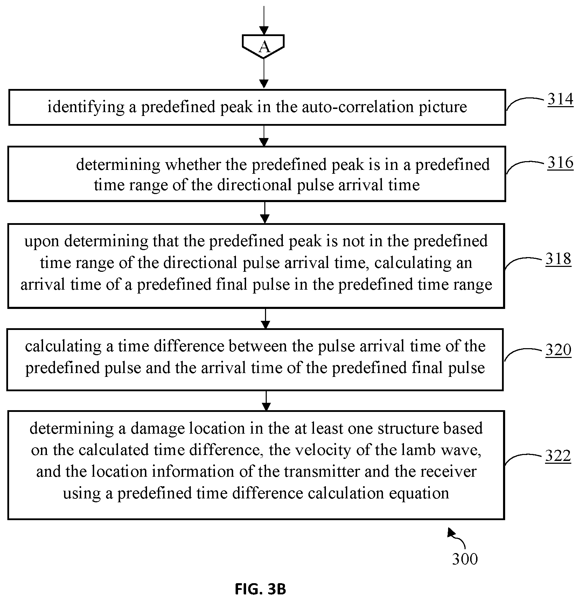

The determined damage location is then displayed on a user device, such as the user device 106. The process of determining damage location is explained in detail with reference to FIG. 3.

The number and arrangement of systems, devices, and/or networks shown in FIG. 1 are provided as an example. There may be additional systems, devices, and/or networks; fewer systems, devices, and/or networks; different systems, devices, and/or networks; and/or differently arranged systems, devices, and/or networks than those shown in FIG. 1. Furthermore, two or more systems or devices shown in FIG. 1 may be implemented within a single system or device, or a single system or device shown in FIG. 1 may be implemented as multiple, distributed systems or devices. Additionally, or alternatively, a set of systems (e.g., one or more systems) or a set of devices (e.g., one or more devices) of the environment 100 may perform one or more functions described as being performed by another set of systems or another set of devices of the environment 100 (e.g., refer scenarios described above).

FIG. 2 illustrates an exemplary block diagram of the damage localization system 102 for damage localization using low power ultrasonic guided waves, in accordance with an embodiment of the present disclosure. In some embodiments, the damage localization system 102 may also be referred as system 102 and may be interchangeably used herein. In some embodiments, the system 102 is embodied as a cloud-based and/or SaaS-based (software as a service) architecture. In some embodiments, the system 102 may be implemented in a server system. In some embodiments, the system 102 may be implemented in a variety of computing systems, such as laptop computers, notebooks, hand-held devices, workstations, mainframe computers, and the like.

In an embodiment, the system 102 includes one or more processors 204, communication interface device(s) or input/output (I/O) interface(s) 206, and one or more data storage devices or memory 202 operatively coupled to the one or more processors 204. The one or more processors 204 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 102 can be implemented in a variety of computing systems, such as laptop computers, notebooks, hand-held devices, workstations, mainframe computers, servers, a network cloud and the like.

The I/O interface device(s) 206 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment a database 208 can be stored in the memory 202, wherein the database 208 may comprise, but are not limited to, a predefined directional arrival time calculation equation, a predefined peak, a predefined time range of a directional pulse arrival time, a predefined time difference calculation equation, one or more processes and the like. The memory 202 further comprises (or may further comprise) information pertaining to input(s)/output(s) of each step performed by the systems and methods of the present disclosure. In other words, input(s) fed at each step and output(s) generated at each step are comprised in the memory 202 and can be utilized in further processing and analysis.

It is noted that the system 102 as illustrated and hereinafter described is merely illustrative of an apparatus that could benefit from embodiments of the present disclosure and, therefore, should not be taken to limit the scope of the present disclosure. It is noted that the system 102 may include fewer or more components than those depicted in FIG. 2.

FIGS. 3A and 3B, collectively, with reference to FIGS. 1 and 2, represent an exemplary flow diagram of a method 300 for damage localization using low power ultrasonic guided waves, in accordance with an embodiment of the present disclosure. The method 300 may use the system 102 of FIGS. 1 and 2 for execution. In an embodiment, the system 102 comprises one or more data storage devices or the memory 208 operatively coupled to the one or more hardware processors 206 and is configured to store instructions for execution of steps of the method 300 by the one or more hardware processors 206. The sequence of steps of the flow diagram may not be necessarily executed in the same order as they are presented. Further, one or more steps may be grouped together and performed in form of a single step, or one step may have several sub-steps that may be performed in parallel or in sequential manner. The steps of the method of the present disclosure will now be explained with reference to the components of the system 102 as depicted in FIG. 2 and FIG. 1.

At step 302 of the present disclosure, the one or more hardware processors 206 of the system 102 receive one or more inputs associated with at least one structure comprising a damage. The one or more inputs comprise a velocity of a lamb wave to be used for damage localization in the at least one structure, a frequency sweep information, and location information of a transmitter and a receiver that are placed on the at least one structure.

At step 304 of the present disclosure, the one or more hardware processors 206 of the system 102 perform a Vector network analyzer (VNA) sweep of a predefined frequency range on the at least one structure to form a primary guided wave resonance spectra. It should be noted that the VNA is a device used for measuring frequency response of a component. In particular, it measures the transmitted and reflected wave passes through the component. In one embodiment, the VNA sweep of 50kHz to 1MHz frequency range is performed on the at least one structure to form the primary guided wave resonance spectra. The above step can be better understood by way of the following description.

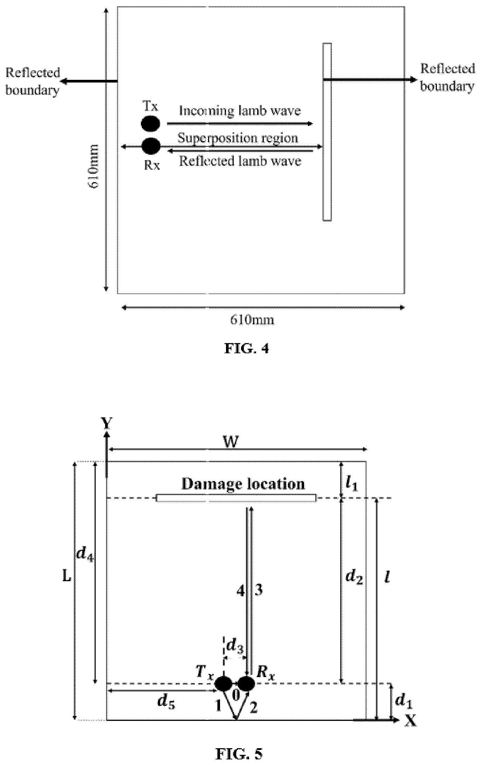

In an exemplary scenario, assume a piezoelectric transmitter ($T_x$) and receiver ($R_x$) are placed side by side at the edge of a sheet (i.e., a structure) and a deep through and through cut (i.e., the damage) is present in the sheet at some distance from the transducer pair as depicted in FIG. 4. So, if a continuous sinusoidal wave is actuated at $T_x$ to generate a Lamb wave, the wave would superpose on its own after reflecting back from the damage location due to huge mismatch of acoustic impedance. The resonance occurs whenever multiples of a half wavelength fit the reflecting boundaries. Mathematically, resonance occurs when:

$$L = n * \lambda/2 \qquad \ldots\text{Equation} \quad (1)$$

and

$$f = v/\lambda \qquad\qquad \text{....Equation (2)},$$

Where, $n$ = 1,2, 3 and so on,

$L$ is a length between two reflecting boundaries (i.e., a distance between one edge and a damage position),

$\lambda$ is the excitation wavelength corresponding to excitation frequency $f$, and $v$ is the velocity of the lamb wave.

So, a sweep of wide range of frequencies (i.e., the predefined frequency range) may produce a plurality of resonance conditions and can be observed by recording the response at $R_x$. Thus, if magnitude of $R_x$ at each frequency excitation is recorded and plotted against the frequencies, a frequency spectrum (also referred as the primary guided wave resonance spectra) is created.

At step 306 of the present disclosure, the one or more hardware processors 206 of the system 102 perform an Inverse Fast Fourier transform (IFFT) on the primary guided wave resonance spectra to obtain a primary time domain pulse propagation picture. The IFFT of the frequency spectrum i.e., the primary guided wave resonance spectra transforms the frequency domain data into time domain and produces an equivalent time domain pulse propagation picture i.e., the primary time domain pulse propagation picture. Once the time domain pulse propagation picture is available, the system 102 follows a pulse-echo based analysis technique to create a pulse propagation diagram (shown with reference to FIG. 5) which is then used to locate defect in the at least one structure.

In the pulse propagation diagram of a typical pulse-echo measurement, a single pulse created at $T_x$ travels back and forth between an edge of the at least one object and a damage location present in the object. A corresponding timing information (as recorded at $R_x$) is them utilized to locate the damage position.

In an exemplary scenario, assume dimension of a thin aluminum sheet i.e., the object is length (L) and width (W) with a deep cut i.e., the damage located at $l$ from one edge of the aluminum sheet (shown with reference to FIG. 5).

As seen in FIG. 5, the transmitter $T_x$ and receiver $R_x$ are colocated at $d_1$ distance apart from the edge. In otherwords, $T_x$ and $R_x$ is placed at $d_2$ from the damage. Moreover, the horizontal distance bewteen $T_x$ and $R_x$ is kept as $d_3$. The arrival time ($T_1$) of a first pulse received by $R_x$ along 'Y' direction may follow the path '1-2' and is approximately given by:

$$T_1 = {2d_1}/{v} \qquad \text{....Equation (3)},$$

A next pulse arrival time ($T_2$) is calculated using an auto-correlation picture that is created by auto-correlating a template of a time domain pulse propagation picture with the time domain pulse propagation picture. The creation of the auto-correlation picture is explained in detail with reference to step 310-318.

The time difference $\Delta t$ is calculated using:

$$\Delta t = T_2 - T_1 = \frac{2}{v} * (d_2 - d_1) \qquad \text{....Equation (4)},$$

So, if $v$ is known and $\Delta t$ is measured from the pulse-propagation picture, the damage location information can be calculated using:

$$d_2 = \frac{\Delta t * v}{2} + d_1 \qquad\qquad \text{....Equation (5)},$$

It is to be noted that for an undamaged metal sheet/structure, the reflection boundaries for resonance is governed by two edges of the metal sheet. So, in the equivalent time domain pulse propagation picture, the pulse transmitted from the $T_x$ would travel and bounce back from the opposite edge. Thus, for the undamaged sheet, $d_2$ is substituted by $d_4$ to capture the distance of the opposite edge from the sensor pair ($T_x$ - $R_x$) and Equation (5) is applied to calculate the corresponding pulse arrival time.

Further, for using Equation (5) for damage localization, $v$ needs to be known in prior. So, the value of $v$ is estimated by putting the $R_x$ and $T_x$ in pitch-catch mode with known distance and then marking the arrival of a first pulse. For example, if $T_x$ to $R_x$ distance is kept as $D$ then $v$ can be calculated using:

$$v = D/t \qquad \text{...Equation (6)},$$

Where, t is the first pulse arrival time as can be seen from the equivalent time domain pulse picture.

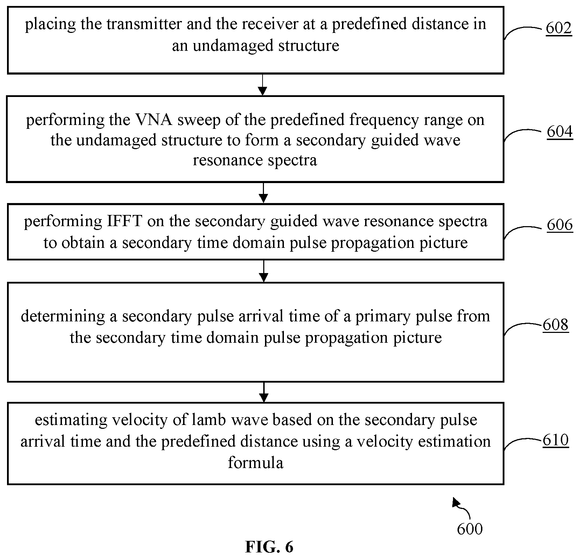

The process followed for estimating velocity of the lamb wave $v$ prior to damage localization is explained in detail with reference to FIG. 6.

It should also be noted that since the sensors are not very directional in nature, some energy (though significantly small compared to forward direction) may also travel along X direction and there is some possibility to have lamb wave resonance setup along the width of the metal sheet/structure. In such cases, a pulse may bounce back and forth in X direction and $R_x$ may record such pulses. Then, in such cases, an approximate pulse arrival time can be represented as:

$$T_{Xdir} = (2 * d_5 + d_3)/v \qquad ...\text{Equation (7)},$$

Where $d_3$ represents a horizontal distance between $T_x$ and $R_x$, and
$d_5$ represents a horizontal distance between an edge of the structure and the $T_x$.

At step 308 of the present disclosure, the one or more hardware processors 206 of the system 102 calculate a pulse arrival time of a predefined pulse from the primary time domain pulse propagation picture. In an embodiment, a first pulse that $R_x$ receives as crosstalk is ignored as the crosstalk does not carry any information on damage location. And a second pulse ($T_1$) (shown with reference to FIG. 5) from the pulse propagation picture is considered for calculating the pulse arrival time.

At step 310 of the present disclosure, the one or more hardware processors 206 of the system 102 calculate a directional pulse arrival time $T_{Xdir}$ of an x-directional pulse based, at least in part, on the velocity of the lamb wave and the location information of the transmitter and the receiver using a predefined directional arrival time calculation equation mentioned in Equation (7).

At step 312 of the present disclosure, the one or more hardware processors 206 of the system 102 create an auto-correlation picture by auto-correlating a template of the time domain pulse propagation picture with the time domain pulse propagation picture. The template is taken from the primary time domain pulse propagation picture based on a template range. In an embodiment, the template range is decided based on the pulse arrival time of the predefined pulse. In at least one example embodiment, without limiting the scope of the invention, the template range is 0 to $3*T_1$.

At step 314 of the present disclosure, the one or more hardware processors 206 of the system 102 identify a predefined peak in the auto-correlation picture. In an embodiment, the predefined peak is the second peak present in the auto-correlation picture as the first peak indicates the template itself in the time domain pulse propagation picture.

At step 316 of the present disclosure, the one or more hardware processors 206 of the system 102 determine whether the predefined peak is in a predefined time range of the directional pulse arrival time. In an embodiment, the predefined time range is $\pm 20\%$ of $T_{Xdir}$. In particular, whether the predefined peak i.e., the second peak is in the range of $\pm 20\%$ of $T_{Xdir}$ is checked at this step.

At step 318 of the present disclosure, the one or more hardware processors 206 of the system 102 calculate an arrival time i.e., $T_2$ of a predefined final pulse in the predefined time range, upon determining that the predefined peak is not in the predefined time range of the directional pulse arrival time. In particular, if the second peak doesn't indicate that the time window in in $\pm 20\%$ of $T_{Xdir}$, then the system 102 takes that peak i.e., the second peak and also calculates the arrival team of that peak. In an embodiment, if the predefined peak i.e., the second peak indicates a time window of $\pm 20\%$ of $T_{Xdir}$ then the predefined peak is ignored and the next highest peak i.e., a new predefined peak is identified in the auto-correlation picture.

At step 320 of the present disclosure, the one or more hardware processors 206 of the system 102 calculate a time difference ($\Delta t$) between the pulse arrival time of the predefined pulse i.e., $T_1$ and the arrival time of the predefined final pulse $T_2$ using Equation (5).

At step 322 of the present disclosure, the one or more hardware processors 206 of the system 102 determine a damage location ($d_2$) in the at least one structure based on the calculated time difference ($\Delta t$), the velocity of the lamb wave (v), and the location information ($d_1$) of the transmitter and the receiver (received at step 302) using a predefined time difference calculation equation mentioned in Equation (6).

In an embodiment, once the damage location ($d_2$) is determined, the system 102 displays the determined damage location on a user device, such as the user device 106.

FIG. 6, with reference to FIGS. 1-5, represents an exemplary flow diagram of a method 400 for computing velocity of a lamb wave, in accordance with an embodiment of the present disclosure. The sequence of steps of the flow diagram may not be necessarily executed in the same order as they are presented. Further, one or more steps may be grouped together and performed in form of a single step, or one step may have several sub-steps that may be performed in parallel or in sequential manner.

At step 602 of the present disclosure, a transmitter $T_x$ and a receiver $R_x$ is placed at a predefined distance (D) in an undamaged structure.

At step 604 of the present disclosure, the VNA sweep of a predefined frequency range i.e., 50kHz to 1MHz is performed on the undamaged structure to form a secondary guided wave resonance spectra.

At step 606 of the present disclosure, an IFFT is performed on the secondary guided wave resonance spectra to obtain a secondary time domain pulse propagation picture.

Once secondary time domain pulse propagation picture is available, a secondary pulse arrival time of a primary pulse from the secondary time domain pulse propagation picture is calculated at step 608. In particular, the arrival time of a first pulse present in the secondary time domain pulse propagation picture is calculated to obtain $t$.

At step 610 of the present disclosure, the velocity of the lamb wave is calculated based on the secondary pulse arrival time and the predefined distance using a velocity estimation formula mention in equation (7).

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

As discussed earlier, existing damage identification techniques perform high voltage pulse excitations using several hundreds of volts in the form of a short burst. So, to overcome the disadvantages, embodiments of the present disclosure provide a method and a system for damage localization using low power ultrasonic guided waves. More specifically, the system and the method use the VNA sweep of 50Khz-1Mhz with low signal amplitude on the structure to form a guided wave resonance spectra, thus ensuring safety of the structure which further makes the system more sustainable from the usage perspective on large structures. Further, the use of low signal amplitude drastically reduces the power requirement of the system, thus making the system usable for structures where high voltage usage is not allowed/not available.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300), comprising:

   receiving (302), by a damage localization system via one or more hardware processors, one or more inputs associated with at least one structure comprising a damage, wherein the one or more inputs comprise a velocity of a lamb wave to be used for damage localization in the at least one structure, a frequency sweep information, and a location information of a transmitter and a receiver that are placed on the at least one structure;
   performing (304), by the damage localization system via the one or more hardware processors, a Vector network analyzer (VNA) sweep of a predefined frequency range on the at least one structure to form a primary guided wave resonance spectra, **characterized in that** the processor implemented method further comprises:

      performing (306), by the damage localization system via the one or more hardware processors, an Inverse Fast Fourier transform (IFFT) on the primary guided wave resonance spectra to obtain a primary time domain pulse propagation picture;
      calculating (308) a pulse arrival time of a predefined pulse along the Y direction from the primary time domain pulse propagation picture;
      calculating (310), by the damage localization system via the one or more hardware processors, a directional pulse arrival time of an x-directional pulse based, at least in part, on the velocity of the lamb wave and the location information of the transmitter and the receiver using a predefined directional arrival time calculation equation;
      creating (312), by the damage localization system via the one or more hardware processors, an auto-correlation picture by auto-correlating a template of the time domain pulse propagation picture with the time domain pulse propagation picture, wherein the template is taken from the primary time domain pulse propagation picture based on a template range, wherein the template range is decided based on the pulse arrival time of the predefined pulse;
      identifying (314), by the damage localization system via the one or more hardware processors, a predefined peak in the auto-correlation picture;
      determining (316), by the damage localization system via the one or more hardware processors, whether the predefined peak is in a predefined time range of the directional pulse arrival time;
      upon determining that the predefined peak is not in the predefined time range of the directional pulse arrival time, calculating (318), by the damage localization system via the one or more hardware processors, an arrival time of a predefined final pulse in the predefined time range;
      calculating (320), by the damage localization system via the one or more hardware processors, a time difference between the pulse arrival time of the predefined pulse and the arrival time of the predefined final pulse; and
      determining (322), by the damage localization system via the one or more hardware processors, a damage location in the at least one structure based on the calculated time difference, the velocity of the lamb wave, and the location information of the transmitter and the receiver using a predefined time difference calculation equation.

2. The processor implemented method (300) of claim 1, comprising:
   displaying, by the damage localization system via the one or more hardware processors, the determined damage location on a user device.

3. The processor implemented method (300) of claim 1, wherein upon determining that the predefined peak is in the predefined time range of the directional pulse arrival time, the method comprises:
   identifying, by the damage localization system via the one or more hardware processors, a new predefined peak in the auto-correlation picture.

4. The processor implemented method (300) of claim 1, wherein the velocity of the lamb wave is estimated by performing:

   placing the transmitter and the receiver at a predefined distance in an undamaged structure;
   performing the VNA sweep of the predefined frequency range on the undamaged structure to form a secondary guided wave resonance spectra;
   performing IFFT on the secondary guided wave resonance spectra to obtain a secondary time domain pulse propagation picture;

determining a secondary pulse arrival time of a primary pulse from the secondary time domain pulse propagation picture; and

estimating velocity of the lamb wave based on the secondary pulse arrival time and the predefined distance using a velocity estimation formula.

5. A damage localization system (102), comprising:

a memory (202) storing instructions;

one or more communication interfaces (206); and

one or more hardware processors (204) coupled to the memory (202) via the one or more communication interfaces (206), wherein the one or more hardware processors (204) are configured by the instructions to:

receive one or more inputs associated with at least one structure comprising a damage, wherein the one or more inputs comprise a velocity of a lamb wave to be used for damage localization in the at least one structure, a frequency sweep information, and a location information of a transmitter and a receiver that are placed on the at least one structure;

perform a Vector network analyzer (VNA) sweep of a predefined frequency range on the at least one structure to form a primary guided wave resonance spectra, **characterized in that** the hardware processor (204) configured to:

perform an Inverse Fast Fourier transform (IFFT) on the primary guided wave resonance spectra to obtain a primary time domain pulse propagation picture;

calculate a pulse arrival time of a predefined pulse along the Y direction from the primary time domain pulse propagation picture;

calculate a directional pulse arrival time of an x-directional pulse based, at least in part, on the velocity of the lamb wave and the location information of the transmitter and the receiver using a predefined directional arrival time calculation equation;

create an auto-correlation picture by auto-correlating a template of the time domain pulse propagation picture with the time domain pulse propagation picture, wherein the template is taken from the primary time domain pulse propagation picture based on a template range, wherein the template range is decided based on the pulse arrival time of the predefined pulse;

identify a predefined peak in the auto-correlation picture;

determine whether the predefined peak is in a predefined time range of the directional pulse arrival time;

calculate an arrival time of a predefined final pulse in the predefined time range upon determining that the predefined peak is not in the predefined time range of the directional pulse arrival time;

calculate a time difference between the pulse arrival time of the predefined pulse and the arrival time of the predefined final pulse; and

determine a damage location in the at least one structure based on the calculated time difference, the velocity of the lamb wave, and the location information of the transmitter and the receiver using a predefined time difference calculation equation.

6. The damage localization system (102) of claim 5, wherein the one or more hardware processors (204) are caused to: display the determined damage location on a user device.

7. The damage localization system (102) of claim 5, wherein upon determining that the predefined peak is in the predefined time range of the directional pulse arrival time, the one or more hardware processors (204) are caused to: identify a new predefined peak in the auto-correlation picture.

8. The damage localization system (102) of claim 5, wherein for estimating the velocity of the lamb wave, the one or more hardware processors (204) are caused to:

place the transmitter and the receiver at a predefined distance in an undamaged structure;

perform the VNA sweep of the predefined frequency range on the undamaged structure to form a secondary guided wave resonance spectra;

perform IFFT on the secondary guided wave resonance spectra to obtain a secondary time domain pulse propagation picture;

determine a secondary pulse arrival time of a primary pulse from the secondary time domain pulse propagation picture; and

estimate velocity of the lamb wave based on the secondary pulse arrival time and the predefined distance using a velocity estimation formula.

9. One or more non-transitory machine-readable information storage mediums comprising one or more instructions which when executed by one or more hardware processors cause:

receiving, by a damage localization system, one or more inputs associated with at least one structure comprising a damage, wherein the one or more inputs comprise a velocity of a lamb wave to be used for damage localization in the at least one structure, a frequency sweep information, and a location information of a transmitter and a receiver that are placed on the at least one structure;

performing, by the damage localization system, a Vector network analyzer (VNA) sweep of a predefined frequency range on the at least one structure to form a primary guided wave resonance spectra, **characterized in that** further comprises:

performing, by the damage localization system, an Inverse Fast Fourier transform (IFFT) on the primary guided wave resonance spectra to obtain a primary time domain pulse propagation picture;

calculating, by the damage localization system, a pulse arrival time of a predefined pulse along the Y direction from the primary time domain pulse propagation picture;

calculating, by the damage localization system, a directional pulse arrival time of an x-directional pulse based, at least in part, on the velocity of the lamb wave and the location information of the transmitter and the receiver using a predefined directional arrival time calculation equation;

creating, by the damage localization system, an auto-correlation picture by auto-correlating a template of the time domain pulse propagation picture with the time domain pulse propagation picture, wherein the template is taken from the primary time domain pulse propagation picture based on a template range, wherein the template range is decided based on the pulse arrival time of the predefined pulse;

identifying, by the damage localization system, a predefined peak in the auto-correlation picture;

determining, by the damage localization system, whether the predefined peak is in a predefined time range of the directional pulse arrival time;

upon determining that the predefined peak is not in the predefined time range of the directional pulse arrival time, calculating, by the damage localization system, an arrival time of a predefined final pulse in the predefined time range;

calculating, by the damage localization system, a time difference between the pulse arrival time of the predefined pulse and the arrival time of the predefined final pulse; and

determining, by the damage localization system, a damage location in the at least one structure based on the calculated time difference, the velocity of the lamb wave, and the location information of the transmitter and the receiver using a predefined time difference calculation equation.

10. The one or more non-transitory machine-readable information storage mediums of claim 9, wherein the one or more instructions which when executed by the one or more hardware processors cause:

displaying, by the damage localization system, the determined damage location on a user device.

11. The one or more non-transitory machine-readable information storage mediums of claim 9, wherein upon determining that the predefined peak is in the predefined time range of the directional pulse arrival time, the one or more instructions which when executed by the one or more hardware processors cause:

identifying, by the damage localization system, a new predefined peak in the auto-correlation picture.

12. The one or more non-transitory machine-readable information storage mediums of claim 10, wherein the velocity of the lamb wave is estimated by performing:

placing the transmitter and the receiver at a predefined distance in an undamaged structure;

performing the VNA sweep of the predefined frequency range on the undamaged structure to form a secondary guided wave resonance spectra;

performing IFFT on the secondary guided wave resonance spectra to obtain a secondary time domain pulse propagation picture;

determining a secondary pulse arrival time of a primary pulse from the secondary time domain pulse propagation picture; and

estimating velocity of the lamb wave based on the secondary pulse arrival time and the predefined distance using a velocity estimation formula.

**Patentansprüche**

1. Prozessorimplementiertes Verfahren (300), umfassend:

   Empfangen (302), durch ein Schadenslokalisierungssystem über einen oder mehrere Hardwareprozessoren, einer oder mehrerer Eingaben, die mindestens einer Struktur zugeordnet sind, die einen Schaden umfasst, wobei die eine oder die mehreren Eingaben eine Geschwindigkeit einer Lammwelle, die zur Schadenslokalisierung in der mindestens einen Struktur verwendet werden soll, eine Frequenzdurchlaufinformation und eine Ortsinformation eines Senders und eines Empfängers, die auf der mindestens einen Struktur platziert sind, umfassen;

   Durchführen (304), durch das Schadenslokalisierungssystem über den einen oder die mehreren Hardwareprozessoren, eines Vektornetzwerkanalysator(VNA)-Durchlaufs eines vordefinierten Frequenzbereichs auf der mindestens einen Struktur, um ein primäres Resonanzspektrum geführter Wellen zu bilden, **dadurch gekennzeichnet, dass** das prozessorimplementierte Verfahren ferner umfasst:

   Durchführen (306), durch das Schadenslokalisierungssystem über den einen oder die mehreren Hardwareprozessoren, einer inversen schnellen Fourier-Transformation (Inverse Fast Fourier Transform, IFFT) auf dem primären Resonanzspektrum geführter Wellen, um ein primäres Zeitbereichsimpulsausbreitungsbild zu erhalten;

   Berechnen (308) einer Impulsankunftszeit eines vordefinierten Impulses entlang der Y-Richtung aus dem primären Zeitbereichsimpulsausbreitungsbild;

   Berechnen (310), durch das Schadenslokalisierungssystem über den einen oder die mehreren Hardwareprozessoren, einer Richtungsimpulsankunftszeit eines x-Richtungsimpulses mindestens teilweise basierend auf der Geschwindigkeit der Lammwelle und der Ortsinformation des Senders und des Empfängers unter Verwendung einer vordefinierten Richtungsankunftszeitberechnungsgleichung;

   Erzeugen (312), durch das Schadenslokalisierungssystem über den einen oder die mehreren Hardwareprozessoren, eines Autokorrelationsbildes durch Autokorrelieren einer Vorlage des Zeitbereichsimpulsausbreitungsbildes mit dem Zeitbereichsimpulsausbreitungsbild, wobei die Vorlage aus dem primären Zeitbereichsimpulsausbreitungsbild basierend auf einem Vorlagenbereich entnommen wird, wobei der Vorlagenbereich basierend auf der Impulsankunftszeit des vordefinierten Impulses entschieden wird;

   Identifizieren (314), durch das Schadenslokalisierungssystem über den einen oder die mehreren Hardwareprozessoren, einer vordefinierten Spitze in dem Autokorrelationsbild;

   Bestimmen (316), durch das Schadenslokalisierungssystem über den einen oder die mehreren Hardwareprozessoren, ob die vordefinierte Spitze in einem vordefinierten Zeitbereich der Richtungsimpulsankunftszeit liegt;

   beim Bestimmen, dass die vordefinierte Spitze nicht in dem vordefinierten Zeitbereich der Richtungsimpulsankunftszeit liegt, Berechnen (318), durch das Schadenslokalisierungssystem über den einen oder die mehreren Hardwareprozessoren, einer Ankunftszeit eines vordefinierten Endimpulses in dem vordefinierten Zeitbereich;

   Berechnen (320), durch das Schadenslokalisierungssystem über den einen oder die mehreren Hardwareprozessoren, einer Zeitdifferenz zwischen der Impulsankunftszeit des vordefinierten Impulses und der Ankunftszeit des vordefinierten Endimpulses; und

   Bestimmen (322), durch das Schadenslokalisierungssystem über den einen oder die mehreren Hardwareprozessoren, eines Schadensortes in der mindestens einen Struktur basierend auf der berechneten Zeitdifferenz, der Geschwindigkeit der Lammwelle und der Ortsinformation des Senders und des Empfängers unter Verwendung einer vordefinierten Zeitdifferenzberechnungsgleichung.

2. Prozessorimplementiertes Verfahren (300) nach Anspruch 1, umfassend:
   Anzeigen, durch das Schadenslokalisierungssystem über den einen oder die mehreren Hardwareprozessoren, des bestimmten Schadensortes auf einer Benutzervorrichtung.

3. Prozessorimplementiertes Verfahren (300) nach Anspruch 1, wobei beim Bestimmen, dass die vordefinierte Spitze in dem vordefinierten Zeitbereich der Richtungsimpulsankunftszeit liegt, das Verfahren umfasst:
   Identifizieren, durch das Schadenslokalisierungssystem über den einen oder die mehreren Hardwareprozessoren, einer neuen vordefinierten Spitze in dem Autokorrelationsbild.

4. Prozessorimplementiertes Verfahren (300) nach Anspruch 1, wobei die Geschwindigkeit der Lammwelle geschätzt wird durch Durchführen von:

Platzieren des Senders und des Empfängers in einem vordefinierten Abstand in einer unbeschädigten Struktur;

Durchführen des VNA-Durchlaufs des vordefinierten Frequenzbereichs auf der unbeschädigten Struktur, um ein sekundäres Resonanzspektrum geführter Wellen zu bilden;

Durchführen von IFFT auf dem sekundären Resonanzspektrum geführter Wellen, um ein sekundäres Zeitbereichsimpulsausbreitungsbild zu erhalten;

Bestimmen einer sekundären Impulsankunftszeit eines primären Impulses aus dem sekundären Zeitbereichsimpulsausbreitungsbild; und

Schätzen der Geschwindigkeit der Lammwelle basierend auf der sekundären Impulsankunftszeit und dem vordefinierten Abstand unter Verwendung einer Geschwindigkeitsschätzungsformel.

5. Schadenslokalisierungssystem (102), umfassend:

einen Speicher (202), der Anweisungen speichert;

eine oder mehrere Kommunikationsschnittstellen (206); und

einen oder mehrere Hardwareprozessoren (204), die mit dem Speicher (202) über die eine oder die mehreren Kommunikationsschnittstellen (206) gekoppelt sind, wobei der eine oder die mehreren Hardwareprozessoren (204) durch die Anweisungen konfiguriert sind zum:

Empfangen einer oder mehrerer Eingaben, die mindestens einer Struktur zugeordnet sind, die einen Schaden umfasst, wobei die eine oder die mehreren Eingaben eine Geschwindigkeit einer Lammwelle, die zur Schadenslokalisierung in der mindestens einen Struktur verwendet werden soll, eine Frequenzdurchlaufinformation und eine Ortsinformation eines Senders und eines Empfängers, die auf der mindestens einen Struktur platziert sind, umfassen;

Durchführen eines Vektornetzwerkanalysator(VNA)-Durchlaufs eines vordefinierten Frequenzbereichs auf der mindestens einen Struktur, um ein primäres Resonanzspektrum geführter Wellen zu bilden, **dadurch gekennzeichnet, dass** der Hardwareprozessor (204) konfiguriert ist zum:

Durchführen einer inversen schnellen Fourier-Transformation (Inverse Fast Fourer Transform, IFFT) auf dem primären Resonanzspektrum geführter Wellen, um ein primäres Zeitbereichsimpulsausbreitungsbild zu erhalten;

Berechnen einer Impulsankunftszeit eines vordefinierten Impulses entlang der Y-Richtung aus dem primären Zeitbereichsimpulsausbreitungsbild;

Berechnen einer Richtungsimpulsankunftszeit eines x-Richtungsimpulses mindestens teilweise basierend auf der Geschwindigkeit der Lammwelle und der Ortsinformation des Senders und des Empfängers unter Verwendung einer vordefinierten Richtungsankunftszeitberechnungsgleichung;

Erzeugen eines Autokorrelationsbildes durch Autokorrelieren einer Vorlage des Zeitbereichsimpulsausbreitungsbildes mit dem Zeitbereichsimpulsausbreitungsbild, wobei die Vorlage aus dem primären Zeitbereichsimpulsausbreitungsbild basierend auf einem Vorlagenbereich entnommen wird, wobei der Vorlagenbereich basierend auf der Impulsankunftszeit des vordefinierten Impulses entschieden wird;

Identifizieren einer vordefinierten Spitze in dem Autokorrelationsbild;

Bestimmen, ob die vordefinierte Spitze in einem vordefinierten Zeitbereich der Richtungsimpulsankunftszeit liegt;

Berechnen einer Ankunftszeit eines vordefinierten Endimpulses in dem vordefinierten Zeitbereich beim Bestimmen, dass die vordefinierte Spitze nicht in dem vordefinierten Zeitbereich der Richtungsimpulsankunftszeit liegt;

Berechnen einer Zeitdifferenz zwischen der Impulsankunftszeit des vordefinierten Impulses und der Ankunftszeit des vordefinierten Endimpulses; und

Bestimmen eines Schadensortes in der mindestens einen Struktur basierend auf der berechneten Zeitdifferenz, der Geschwindigkeit der Lammwelle und der Ortsinformation des Senders und des Empfängers unter Verwendung einer vordefinierten Zeitdifferenzberechnungsgleichung.

6. Schadenslokalisierungssystem (102) nach Anspruch 5, wobei der eine oder die mehreren Hardwareprozessoren (204) veranlasst werden zum:
Anzeigen des bestimmten Schadensortes auf einer Benutzervorrichtung.

7. Schadenslokalisierungssystem (102) nach Anspruch 5, wobei beim Bestimmen, dass die vordefinierte Spitze in dem vordefinierten Zeitbereich der Richtungsimpulsankunftszeit liegt, der eine oder die mehreren Hardwareprozessoren (204) veranlasst werden zum:

Identifizieren einer neuen vordefinierten Spitze in dem Autokorrelationsbild.

8. Schadenslokalisierungssystem (102) nach Anspruch 5, wobei zum Schätzen der Geschwindigkeit der Lammwelle der eine oder die mehreren Hardwareprozessoren (204) veranlasst werden zum:

Platzieren des Senders und des Empfängers in einem vordefinierten Abstand in einer unbeschädigten Struktur;
Durchführen des VNA-Durchlaufs des vordefinierten Frequenzbereichs auf der unbeschädigten Struktur, um ein sekundäres Resonanzspektrum geführter Wellen zu bilden;
Durchführen von IFFT auf dem sekundären Resonanzspektrum geführter Wellen, um ein sekundäres Zeitbereichsimpulsausbreitungsbild zu erhalten;
Bestimmen einer sekundären Impulsankunftszeit eines primären Impulses aus dem sekundären Zeitbereichsimpulsausbreitungsbild; und
Schätzen der Geschwindigkeit der Lammwelle basierend auf der sekundären Impulsankunftszeit und dem vordefinierten Abstand unter Verwendung einer Geschwindigkeitsschätzungsformel.

9. Ein oder mehrere nichtflüchtige maschinenlesbare Informationsspeichermedien, die eine oder mehrere Anweisungen umfassen, die bei Ausführung durch einen oder mehrere Hardwareprozessoren Folgendes bewirken:

Empfangen, durch ein Schadenslokalisierungssystem, einer oder mehrerer Eingaben, die mindestens einer Struktur zugeordnet sind, die einen Schaden umfasst, wobei die eine oder die mehreren Eingaben eine Geschwindigkeit einer Lammwelle, die zur Schadenslokalisierung in der mindestens einen Struktur verwendet werden soll, eine Frequenzdurchlaufinformation und eine Ortsinformation eines Senders und eines Empfängers, die auf der mindestens einen Struktur platziert sind, umfassen;
Durchführen, durch das Schadenslokalisierungssystem, eines Vektornetzwerkanalysator(VNA)-Durchlaufs eines vordefinierten Frequenzbereichs auf der mindestens einen Struktur, um ein primäres Resonanzspektrum geführter Wellen zu bilden, **dadurch gekennzeichnet, dass** es ferner umfasst:

Durchführen, durch das Schadenslokalisierungssystem, einer inversen schnellen Fourier-Transformation (Inverse Fast Fourier Transform, IFFT) auf dem primären Resonanzspektrum geführter Wellen, um ein primäres Zeitbereichsimpulsausbreitungsbild zu erhalten;
Berechnen, durch das Schadenslokalisierungssystem, einer Impulsankunftszeit eines vordefinierten Impulses entlang der Y-Richtung aus dem primären Zeitbereichsimpulsausbreitungsbild;
Berechnen, durch das Schadenslokalisierungssystem, einer Richtungsimpulsankunftszeit eines x-Richtungsimpulses mindestens teilweise basierend auf der Geschwindigkeit der Lammwelle und der Ortsinformation des Senders und des Empfängers unter Verwendung einer vordefinierten Richtungsankunftszeitberechnungsgleichung;
Erzeugen, durch das Schadenslokalisierungssystem, eines Autokorrelationsbildes durch Autokorrelieren einer Vorlage des Zeitbereichsimpulsausbreitungsbildes mit dem Zeitbereichsimpulsausbreitungsbild, wobei die Vorlage aus dem primären Zeitbereichsimpulsausbreitungsbild basierend auf einem Vorlagenbereich entnommen wird, wobei der Vorlagenbereich basierend auf der Impulsankunftszeit des vordefinierten Impulses entschieden wird;
Identifizieren, durch das Schadenslokalisierungssystem, einer vordefinierten Spitze in dem Autokorrelationsbild;
Bestimmen, durch das Schadenslokalisierungssystem, ob die vordefinierte Spitze in einem vordefinierten Zeitbereich der Richtungsimpulsankunftszeit liegt;
beim Bestimmen, dass die vordefinierte Spitze nicht in dem vordefinierten Zeitbereich der Richtungsimpulsankunftszeit liegt, Berechnen, durch das Schadenslokalisierungssystem, einer Ankunftszeit eines vordefinierten Endimpulses in dem vordefinierten Zeitbereich;
Berechnen, durch das Schadenslokalisierungssystem, einer Zeitdifferenz zwischen der Impulsankunftszeit des vordefinierten Impulses und der Ankunftszeit des vordefinierten Endimpulses; und
Bestimmen, durch das Schadenslokalisierungssystem, eines Schadensortes in der mindestens einen Struktur basierend auf der berechneten Zeitdifferenz, der Geschwindigkeit der Lammwelle und der Ortsinformation des Senders und des Empfängers unter Verwendung einer vordefinierten Zeitdifferenzberechnungsgleichung.

10. Ein oder mehrere nichtflüchtige maschinenlesbare Informationsspeichermedien nach Anspruch 9, wobei die eine oder die mehreren Anweisungen, die bei Ausführung durch den einen oder die mehreren Hardwareprozessoren Folgendes bewirken:

EP 4 530 624 B1

Anzeigen, durch das Schadenslokalisierungssystem, des bestimmten Schadensortes auf einer Benutzervorrichtung.

11. Ein oder mehrere nichtflüchtige maschinenlesbare Informationsspeichermedien nach Anspruch 9, wobei beim Bestimmen, dass die vordefinierte Spitze in dem vordefinierten Zeitbereich der Richtungsimpulsankunftszeit liegt, die eine oder die mehreren Anweisungen, die bei Ausführung durch den einen oder die mehreren Hardwareprozessoren Folgendes bewirken:
Identifizieren, durch das Schadenslokalisierungssystem, einer neuen vordefinierten Spitze in dem Autokorrelationsbild.

12. Ein oder mehrere nichtflüchtige maschinenlesbare Informationsspeichermedien nach Anspruch 10, wobei die Geschwindigkeit der Lammwelle geschätzt wird durch Durchführen von:

Platzieren des Senders und des Empfängers in einem vordefinierten Abstand in einer unbeschädigten Struktur;
Durchführen des VNA-Durchlaufs des vordefinierten Frequenzbereichs auf der unbeschädigten Struktur, um ein sekundäres Resonanzspektrum geführter Wellen zu bilden;
Durchführen von IFFT auf dem sekundären Resonanzspektrum geführter Wellen, um ein sekundäres Zeitbereichsimpulsausbreitungsbild zu erhalten;
Bestimmen einer sekundären Impulsankunftszeit eines primären Impulses aus dem sekundären Zeitbereichsimpulsausbreitungsbild; und
Schätzen der Geschwindigkeit der Lammwelle basierend auf der sekundären Impulsankunftszeit und dem vordefinierten Abstand unter Verwendung einer Geschwindigkeitsschätzungsformel.

**Revendications**

1. Procédé mis en œuvre par processeur (300), comprenant :

la réception (302), par un système de localisation de dommages via un ou plusieurs processeurs matériels, d'une ou plusieurs entrées associées à au moins une structure comprenant un dommage, dans lequel les une ou plusieurs entrées comprennent une vitesse d'une onde de Lamb à utiliser pour la localisation de dommages dans l'au moins une structure, des informations de balayage de fréquence, et des informations d'emplacement d'un émetteur et d'un récepteur qui sont placés sur l'au moins une structure ;
la réalisation (304), par le système de localisation de dommages via les un ou plusieurs processeurs matériels, d'un balayage d'analyseur de réseau vectoriel (VNA) d'une plage de fréquences prédéfinie sur l'au moins une structure pour former un spectre de résonance d'onde guidée primaire, **caractérisé en ce que** le procédé mis en œuvre par processeur comprend en outre :

la réalisation (306), par le système de localisation de dommages via les un ou plusieurs processeurs matériels, d'une transformée de Fourier rapide inverse (IFFT) sur le spectre de résonance d'onde guidée primaire pour obtenir une image de propagation d'impulsion dans le domainedans le domaine temporel primaire ;
le calcul (308) d'un temps d'arrivée d'impulsion d'une impulsion prédéfinie le long de la direction Y à partir de l'image de propagation d'impulsion dans le domainedans le domaine temporel primaire ;
le calcul (310), par le système de localisation de dommages via les un ou plusieurs processeurs matériels, d'un temps d'arrivée d'impulsion directionnel d'une impulsion directionnelle x sur la base, au moins en partie, de la vitesse de l'onde de Lamb et des informations d'emplacement de l'émetteur et du récepteur en utilisant une équation de calcul de temps d'arrivée directionnel prédéfinie ;
la création (312), par le système de localisation de dommages via les un ou plusieurs processeurs matériels, d'une image d'autocorrélation par autocorrélation d'un modèle de l'image de propagation d'impulsion dans le domainedans le domaine temporel avec l'image de propagation d'impulsion dans le domainedans le domaine temporel, dans lequel le modèle est pris à partir de l'image de propagation d'impulsion dans le domainedans le domaine temporel primaire sur la base d'une plage de modèle, dans lequel la plage de modèle est décidée sur la base du temps d'arrivée d'impulsion de l'impulsion prédéfinie ;
l'identification (314), par le système de localisation de dommages via les un ou plusieurs processeurs matériels, d'un pic prédéfini dans l'image d'autocorrélation ;
la détermination (316), par le système de localisation de dommages via les un ou plusieurs processeurs matériels, si le pic prédéfini est dans une plage de temps prédéfinie du temps d'arrivée d'impulsion directionnel ;

16

lors de la détermination que le pic prédéfini n'est pas dans la plage de temps prédéfinie du temps d'arrivée d'impulsion directionnel, le calcul (318), par le système de localisation de dommages via les un ou plusieurs processeurs matériels, d'un temps d'arrivée d'une impulsion finale prédéfinie dans la plage de temps prédéfinie ;

le calcul (320), par le système de localisation de dommages via les un ou plusieurs processeurs matériels, d'une différence de temps entre le temps d'arrivée d'impulsion de l'impulsion prédéfinie et le temps d'arrivée de l'impulsion finale prédéfinie ; et

la détermination (322), par le système de localisation de dommages via les un ou plusieurs processeurs matériels, d'un emplacement de dommages dans l'au moins une structure sur la base de la différence de temps calculée, de la vitesse de l'onde de Lamb, et des informations d'emplacement de l'émetteur et du récepteur en utilisant une équation de calcul de différence de temps prédéfinie.

2. Procédé mis en œuvre par processeur (300) selon la revendication 1, comprenant :
l'affichage, par le système de localisation de dommages via les un ou plusieurs processeurs matériels, de l'emplacement de dommages déterminé sur un dispositif utilisateur.

3. Procédé mis en œuvre par processeur (300) selon la revendication 1, dans lequel lors de la détermination que le pic prédéfini est dans la plage de temps prédéfinie du temps d'arrivée d'impulsion directionnel, le procédé comprend :
l'identification, par le système de localisation de dommages via les un ou plusieurs processeurs matériels, d'un nouveau pic prédéfini dans l'image d'autocorrélation.

4. Procédé mis en œuvre par processeur (300) selon la revendication 1, dans lequel la vitesse de l'onde de Lamb est estimée en effectuant :

le placement de l'émetteur et du récepteur à une distance prédéfinie dans une structure non endommagée ;
la réalisation du balayage VNA de la plage de fréquences prédéfinie sur la structure non endommagée pour former un spectre de résonance d'onde guidée secondaire ;
la réalisation d'une IFFT sur le spectre de résonance d'onde guidée secondaire pour obtenir une image de propagation d'impulsion dans le domainedans le domaine temporel secondaire ;
la détermination d'un temps d'arrivée d'impulsion secondaire d'une impulsion primaire à partir de l'image de propagation d'impulsion dans le domainedans le domaine temporel secondaire ; et
l'estimation de la vitesse de l'onde de Lamb sur la base du temps d'arrivée d'impulsion secondaire et de la distance prédéfinie en utilisant une formule d'estimation de vitesse.

5. Système de localisation de dommages (102), comprenant :

une mémoire (202) stockant des instructions ;
une ou plusieurs interfaces de communication (206) ; et
un ou plusieurs processeurs matériels (204) couplés à la mémoire (202) via les une ou plusieurs interfaces de communication (206), dans lequel les un ou plusieurs processeurs matériels (204) sont configurés par les instructions pour :

recevoir une ou plusieurs entrées associées à au moins une structure comprenant un dommage, dans lequel les une ou plusieurs entrées comprennent une vitesse d'une onde de Lamb à utiliser pour la localisation de dommages dans l'au moins une structure, des informations de balayage de fréquence, et des informations d'emplacement d'un émetteur et d'un récepteur qui sont placés sur l'au moins une structure ;
réaliser un balayage d'analyseur de réseau vectoriel (VNA) d'une plage de fréquences prédéfinie sur l'au moins une structure pour former un spectre de résonance d'onde guidée primaire, **caractérisé en ce que** le processeur matériel (204) est configuré pour :

réaliser une transformée de Fourier rapide inverse (IFFT) sur le spectre de résonance d'onde guidée primaire pour obtenir une image de propagation d'impulsion dans le domainedans le domaine temporel primaire ;
calculer un temps d'arrivée d'impulsion d'une impulsion prédéfinie le long de la direction Y à partir de l'image de propagation d'impulsion dans le domainedans le domaine temporel primaire ;
calculer un temps d'arrivée d'impulsion directionnel d'une impulsion directionnelle x sur la base, au moins en partie, de la vitesse de l'onde de Lamb et des informations d'emplacement de l'émetteur et du récepteur en utilisant une équation de calcul de temps d'arrivée directionnel prédéfinie ;

créer une image d'autocorrélation par autocorrélation d'un modèle de l'image de propagation d'impulsion dans le domainedans le domaine temporel avec l'image de propagation d'impulsion dans le domainedans le domaine temporel, dans lequel le modèle est pris à partir de l'image de propagation d'impulsion dans le domainedans le domaine temporel primaire sur la base d'une plage de modèle, dans lequel la plage de modèle est décidée sur la base du temps d'arrivée d'impulsion de l'impulsion prédéfinie ;

identifier un pic prédéfini dans l'image d'autocorrélation ;

déterminer si le pic prédéfini est dans une plage de temps prédéfinie du temps d'arrivée d'impulsion directionnel ;

calculer un temps d'arrivée d'une impulsion finale prédéfinie dans la plage de temps prédéfinie lors de la détermination que le pic prédéfini n'est pas dans la plage de temps prédéfinie du temps d'arrivée d'impulsion directionnel ;

calculer une différence de temps entre le temps d'arrivée d'impulsion de l'impulsion prédéfinie et le temps d'arrivée de l'impulsion finale prédéfinie ; et

déterminer un emplacement de dommages dans l'au moins une structure sur la base de la différence de temps calculée, de la vitesse de l'onde de Lamb, et des informations d'emplacement de l'émetteur et du récepteur en utilisant une équation de calcul de différence de temps prédéfinie.

6. Système de localisation de dommages (102) selon la revendication 5, dans lequel les un ou plusieurs processeurs matériels (204) sont amenés à :
afficher l'emplacement de dommages déterminé sur un dispositif utilisateur.

7. Système de localisation de dommages (102) selon la revendication 5, dans lequel lors de la détermination que le pic prédéfini est dans la plage de temps prédéfinie du temps d'arrivée d'impulsion directionnel, les un ou plusieurs processeurs matériels (204) sont amenés à :
identifier un nouveau pic prédéfini dans l'image d'autocorrélation.

8. Système de localisation de dommages (102) selon la revendication 5, dans lequel pour estimer la vitesse de l'onde de Lamb, les un ou plusieurs processeurs matériels (204) sont amenés à :

placer l'émetteur et le récepteur à une distance prédéfinie dans une structure non endommagée ;
réaliser le balayage VNA de la plage de fréquences prédéfinie sur la structure non endommagée pour former un spectre de résonance d'onde guidée secondaire ;
réaliser une IFFT sur le spectre de résonance d'onde guidée secondaire pour obtenir une image de propagation d'impulsion dans le domainedans le domaine temporel secondaire ;
déterminer un temps d'arrivée d'impulsion secondaire d'une impulsion primaire à partir de l'image de propagation d'impulsion dans le domainedans le domaine temporel secondaire ; et
estimer la vitesse de l'onde de Lamb sur la base du temps d'arrivée d'impulsion secondaire et de la distance prédéfinie en utilisant une formule d'estimation de vitesse.

9. Un ou plusieurs supports de stockage d'informations lisibles par machine non transitoires comprenant une ou plusieurs instructions qui, lorsqu'elles sont exécutées par un ou plusieurs processeurs matériels, amènent :

la réception, par un système de localisation de dommages, d'une ou plusieurs entrées associées à au moins une structure comprenant un dommage, dans lequel les une ou plusieurs entrées comprennent une vitesse d'une onde de Lamb à utiliser pour la localisation de dommages dans l'au moins une structure, des informations de balayage de fréquence, et des informations d'emplacement d'un émetteur et d'un récepteur qui sont placés sur l'au moins une structure ;
la réalisation, par le système de localisation de dommages, d'un balayage d'analyseur de réseau vectoriel (VNA) d'une plage de fréquences prédéfinie sur l'au moins une structure pour former un spectre de résonance d'onde guidée primaire, **caractérisé en ce qu'**il comprend en outre :

la réalisation, par le système de localisation de dommages, d'une transformée de Fourier rapide inverse (IFFT) sur le spectre de résonance d'onde guidée primaire pour obtenir une image de propagation d'impulsion dans le domainedans le domaine temporel primaire ;
le calcul, par le système de localisation de dommages, d'un temps d'arrivée d'impulsion d'une impulsion prédéfinie le long de la direction Y à partir de l'image de propagation d'impulsion dans le domainedans le domaine temporel primaire ;

le calcul, par le système de localisation de dommages, d'un temps d'arrivée d'impulsion directionnel d'une impulsion directionnelle x sur la base, au moins en partie, de la vitesse de l'onde de Lamb et des informations d'emplacement de l'émetteur et du récepteur en utilisant une équation de calcul de temps d'arrivée directionnel prédéfinie ;

la création, par le système de localisation de dommages, d'une image d'autocorrélation par autocorrélation d'un modèle de l'image de propagation d'impulsion dans le domaine temporel avec l'image de propagation d'impulsion dans le domaine temporel, dans lequel le modèle est pris à partir de l'image de propagation d'impulsion dans le domaine temporel primaire sur la base d'une plage de modèle, dans lequel la plage de modèle est décidée sur la base du temps d'arrivée d'impulsion de l'impulsion prédéfinie ;

l'identification, par le système de localisation de dommages, d'un pic prédéfini dans l'image d'autocorrélation ;

la détermination, par le système de localisation de dommages, si le pic prédéfini est dans une plage de temps prédéfinie du temps d'arrivée d'impulsion directionnel ;

lors de la détermination que le pic prédéfini n'est pas dans la plage de temps prédéfinie du temps d'arrivée d'impulsion directionnel, le calcul, par le système de localisation de dommages, d'un temps d'arrivée d'une impulsion finale prédéfinie dans la plage de temps prédéfinie ;

le calcul, par le système de localisation de dommages, d'une différence de temps entre le temps d'arrivée d'impulsion de l'impulsion prédéfinie et le temps d'arrivée de l'impulsion finale prédéfinie ; et

la détermination, par le système de localisation de dommages, d'un emplacement de dommages dans l'au moins une structure sur la base de la différence de temps calculée, de la vitesse de l'onde de Lamb, et des informations d'emplacement de l'émetteur et du récepteur en utilisant une équation de calcul de différence de temps prédéfinie.

10. Un ou plusieurs supports de stockage d'informations lisibles par machine non transitoires selon la revendication 9, dans lequel les une ou plusieurs instructions qui, lorsqu'elles sont exécutées par les un ou plusieurs processeurs matériels, amènent :

l'affichage, par le système de localisation de dommages, de l'emplacement de dommages déterminé sur un dispositif utilisateur.

11. Un ou plusieurs supports de stockage d'informations lisibles par machine non transitoires selon la revendication 9, dans lequel lors de la détermination que le pic prédéfini est dans la plage de temps prédéfinie du temps d'arrivée d'impulsion directionnel, les une ou plusieurs instructions qui, lorsqu'elles sont exécutées par les un ou plusieurs processeurs matériels, amènent :

l'identification, par le système de localisation de dommages, d'un nouveau pic prédéfini dans l'image d'autocorrélation.

12. Un ou plusieurs supports de stockage d'informations lisibles par machine non transitoires selon la revendication 10, dans lequel la vitesse de l'onde de Lamb est estimée en effectuant :

le placement de l'émetteur et du récepteur à une distance prédéfinie dans une structure non endommagée ;

la réalisation du balayage VNA de la plage de fréquences prédéfinie sur la structure non endommagée pour former un spectre de résonance d'onde guidée secondaire ;

la réalisation d'une IFFT sur le spectre de résonance d'onde guidée secondaire pour obtenir une image de propagation d'impulsion dans le domaine temporel secondaire ;

la détermination d'un temps d'arrivée d'impulsion secondaire d'une impulsion primaire à partir de l'image de propagation d'impulsion dans le domaine temporel secondaire ; et

l'estimation de la vitesse de l'onde de Lamb sur la base du temps d'arrivée d'impulsion secondaire et de la distance prédéfinie en utilisant une formule d'estimation de vitesse.

FIG. 1

FIG. 2

receiving, by a damage localization system via one or more hardware processors, one or more inputs associated with at least one structure comprising a damage, wherein the one or more inputs comprise a velocity of a lamb wave to be used for damage localization in the at least one structure, a frequency sweep information, and location information of a transmitter and a receiver that are placed on the at least one structure 302

performing, by the damage localization system via the one or more hardware processors, a Vector network analyzer (VNA) sweep of a predefined frequency range on the at least one structure to form a primary guided wave resonance spectra 304

performing an Inverse Fast Fourier transform (IFFT) on the primary guided wave resonance spectra to obtain a primary time domain pulse propagation picture 306

calculating a pulse arrival time of a predefined pulse from the primary time domain pulse propagation picture 308

calculating a directional pulse arrival time of an x-directional pulse based, at least in part, on the velocity of the lamb wave and the location information of the transmitter and the receiver using a predefined directional arrival time calculation equation 310

creating an auto-correlation picture by auto-correlating a template of the time domain pulse propagation picture with the time domain pulse propagation picture, wherein the template is taken from the primary time domain pulse propagation picture based on a template range, wherein the template range is decided based on the pulse arrival time of the predefined pulse 312

A

300

**FIG. 3A**

A

identifying a predefined peak in the auto-correlation picture  —314

determining whether the predefined peak is in a predefined time range of the directional pulse arrival time  —316

upon determining that the predefined peak is not in the predefined time range of the directional pulse arrival time, calculating an arrival time of a predefined final pulse in the predefined time range  —318

calculating a time difference between the pulse arrival time of the predefined pulse and the arrival time of the predefined final pulse  —320

determining a damage location in the at least one structure based on the calculated time difference, the velocity of the lamb wave, and the location information of the transmitter and the receiver using a predefined time difference calculation equation  —322

300

**FIG. 3B**

**FIG. 4**

**FIG. 5**

placing the transmitter and the receiver at a predefined distance in an undamaged structure — 602

performing the VNA sweep of the predefined frequency range on the undamaged structure to form a secondary guided wave resonance spectra — 604

performing IFFT on the secondary guided wave resonance spectra to obtain a secondary time domain pulse propagation picture — 606

determining a secondary pulse arrival time of a primary pulse from the secondary time domain pulse propagation picture — 608

estimating velocity of lamb wave based on the secondary pulse arrival time and the predefined distance using a velocity estimation formula — 610

600

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321065751

- EP 4160201 A1


**Non-patent literature cited in the description**

- **BASU SUBHADEEP et al.** *Guided Wave Resonance to Identify Damage in Thin Composite Plates*
- **EREMIN ARTEM et al.** *Identification of delamination based on the Lamb wave scattering resonance frequencies*

- **GAIN SUPRIYA et al.** *Exploration of Ultrasonic Guided Wave Resonance Technique for Damage Localization*